(19) Europäisches Patentamt
European Patent Office
Office européen des brevets

(11) **EP 0 779 972 B1**

(12) **EUROPÄISCHE PATENTSCHRIFT**

(45) Veröffentlichungstag und Bekanntmachung des Hinweises auf die Patenterteilung:
**08.12.1999 Patentblatt 1999/49**

(21) Anmeldenummer: **95930380.1**

(22) Anmeldetag: **11.09.1995**

(51) Int Cl.6: **G01M 17/04**

(86) Internationale Anmeldenummer:
**PCT/DE95/01234**

(87) Internationale Veröffentlichungsnummer:
**WO 96/07882 (14.03.1996 Gazette 1996/12)**

(54) **Prüfen einer Stossdämpferkennlinie am Fahrzeug**

Testing a characteristic of a shock absorber whilst mounted on a vehicle

Contrôle d'une caractéristique d'un amortisseur sur un véhicule

(84) Benannte Vertragsstaaten:
**AT BE CH DE ES FR GB IT LI LU NL SE**

(30) Priorität: **10.09.1994 DE 4432286**

(43) Veröffentlichungstag der Anmeldung:
**25.06.1997 Patentblatt 1997/26**

(73) Patentinhaber: **Müller, Roland**
**66453 Gersheim (DE)**

(72) Erfinder: **Müller, Roland**
**66453 Gersheim (DE)**

(74) Vertreter: **Vièl, Christof, Dipl.-Ing. et al**
**Patentanwälte VIEL & VIEL,**
**Postfach 65 04 03**
**66143 Saarbrücken (DE)**

(56) Entgegenhaltungen:
EP-A- 0 220 115    DE-A- 4 305 048
FR-A- 2 217 687    US-A- 3 902 352
US-A- 3 937 058    US-A- 4 103 532

## Beschreibung

Die Erfindung betrifft eine Vorrichtung zum Prüfen von Stoßdämpfern von Fahrzeugen mit mindestens einer Aufnahme für ein Rad eines Fahrzeuges, Mitteln zum Versetzen des aufgenommenen Rades in Schwingungen und Mitteln zum Bestimmen von Schwingungsausschlägen bei unterschiedlichen Frequenzen sowie einer Auswerte- und Ausgabeeinheit.

Geräte gemäß dem Oberbegriff sind bekannt, z.B. aus dem Prospekt "BOGE SHOCKTESTER". Dort wird ein fester Meßstand beschrieben, auf den ein Fahrzeug mit zwei Rädern gleichzeitig auffahren kann. Eine senkrecht auf- und abschwingende Radauflage versetzt die Achsmassen des Fahrzeugs in Bewegung. Nach Abschalten des Antriebs läuft die Schwingung der Achse frei aus und durchläuft dabei deren Resonanzbereich. Die Größe des Schwingungsausschlags in der Resonanzstelle steht dabei in physikalisch-mathematischem Zusammenhang mit der Dämpfung. Der Schwingungsausschlag wird von einem Wegaufnehmer aufgenommen und angezeigt bzw. aufgezeichnet. Nachteilig ist dabei, daß das Meßergebnis stark vom Reifendruck abhängt; eine Abweichung des Reifendrucks um 1 bar kann das Meßergebnis um bis zu 30 % verfälschen.

Auch aus dem Deutschen Gebrauchsmuster G 93 03 201 ist ein nach diesem Meßverfahren arbeitender Stoßdämpfer-Prüfstand bekannt. Hierbei wird ebenfalls über eine Feder ein Rad in Schwingungen versetzt und die maximale Schwingungsamplitude bei Resonanzfrequenz gemessen. Die Änderung der Schwingungsamplitude ist gleichbedeutend mit einer Kraftänderung. Die Spitzenamplitude der Kraft wird von der statischen Kraft abgezogen, die vor Beginn der Schwingungserzeugung ermittelt wurde. Nachteilig ist auch hier, daß unterschiedlicher Reifendruck das Meßergebnis stark beeinflußt.

Hinzu kommt, daß beide Vorrichtungen lediglich einen Sensor für die Messung der Schwingungs- bzw. Kraftamplitude aufweisen. Es ist dabei nicht vorgesehen, ebenfalls die Feder des Schwingungssystems zu überprüfen, was schon hinsichtlich der Betriebssicherheit ungünstig ist.

Schließlich sind beide Vorrichtungen als feste Prüfstände konzipiert und somit für kleine Werkstätten nicht erschwinglich bzw. zu platzraubend. Es besteht jedoch Bedarf für ein handliches, mobiles Gerät zum Prüfen von Stoßdämpfern.

Aus der DE-A-43 05 048 ist ein Verfahren zur Prüfung eines Schwingungsdämpfers eines Kraftfahrzeuges bekannt, bei dem ein als Dämpfungskoeffizient bezeichneter Wert nach einem Parameterschätzungsverfahren ermittelt wird. Dieser geschätzte Dämpfungskoeffizient wird mit einem Referenzwert verglichen, wobei festgestellt wird, ob die Abweichung innerhalb eines Toleranzbereiches liegt.

Dieses Verfahren beschränkt sich also auf die Bestimmung eines Einzelwertes und dem Vergleich dieses Einzelwertes mit einem Referenzwert, wobei diese Bestimmung zudem über ein Schätzverfahren erfolgt. Eine qualifizierte, sich über einen größeren Wirkbereich erstreckende Aussage über den Zustand eines Stoßdämpfers läßt sich mit diesem Verfahren somit nicht ermitteln.

Aufgabe der Erfindung ist es somit, eine Vorrichtung zum Prüfen von Stoßdämpfern eines Fahrzeuges gemäß dem Oberbegriff zu schaffen, bei dem die beschriebenen Nachteile vermieden werden und mit dem eine qualifizierte Prüfung der Stoßdämpfer praktisch unabhängig vom Reifendruck und den Massen erfolgen kann.

Diese Aufgabe wird erfindungsgemäß nach dem Anspruch 1 gelöst.

Bisher kann die Stoßdämpferkennlinie, d.h. ein Kraft-Geschwindigkeitsdiagramm, nur in speziellen Prüfständen an ausgebauten Stoßdämpfern ermittelt werden. Im eingebauten Zustand können nur Einzelwerte ermittelt und mit Referenzwerten verglichen werden, was als Aussage über den Zustand eines Stoßdämpfers unzureichend ist.

Eine Ausbildung der Erfindung besteht darin, daß die Mittel zum Bestimmen der Stoßdämpferkennlinie Mittel zum Bestimmen der in das Stoßdämpfer und Feder des Fahrzeuges enthaltende schwingende System über die Aufnahme für das Rad eingespeisten Leistung aufweisen.

Dies ist insofern vorteilhaft, als die Gewinnung der Meßgrößen einfach und kostengünstig ist und die Beeinflussung der Meßergebnisse durch unkontrollierbare Nebeneffekte (schwingende Motormasse) gering ist.

Eine Ausbildung der Erfindung besteht darin, daß die Mittel zum Bestimmen der Stoßdämpferkennlinie Mittel zum Bestimmen der Beschleunigungen der Massen im Stoßdämpfer und Feder des Fahrzeuges enthaltenden schwingenden System aufweisen. Die Beschleunigungen werden hierbei über Beschleunigungssensoren gemessen, die beschleunigten Massen werden bestimmt oder sind bekannt.

Eine Weiterbildung der Erfindung besteht darin, daß Sensoren an der Radnabe und der Karosserie des Fahrzeugs vorgesehen sind und daß der Erregerhub der Mittel zum Versetzen des Rades in Schwingungen variabel ist.

Durch diese Maßnahmen kann die Federkonstante der Radaufhängung vor der eigentlichen Prüfung des Stoßdämpfers gemessen werden und die Amplitude bei Resonanzfrequenz genau bestimmt werden.

Erfindungsgemäß ist, daß mit den Sensoren an der Radnabe und der Karosserie des Fahrzeugs die Federkonstante der Elemente der Radaufhängung meßbar ist.

Diese Maßnahme liefert auch die Werte für die Resonanzfrequenzermittlung der Karosserie bzw. der Relativbewegung zwischen Karosserie und Radnabe.

Weiterhin ist vorgesehen, daß Mittel zum Regulieren des Höhenniveaus der Karosserie des Fahrzeuges vorgesehen sind.

Es ist zweckmäßig, daß die Vorrichtung verfahrbar ist.

Eine Ausbildung der Erfindung ist dadurch gekennzeichnet, daß ein steuerbarer Exzenter zum Variieren des Erregerhubs vorgesehen ist.

Weiterhin ist es zweckmäßig, daß die Ausgabeeinheit ein Display und/oder einen Drucker umfaßt.

Durch eine Messung der Federkonstanten der Radaufhängung wird sichergestellt, daß die Meßergebnisse der Stoßdämpfer-Messung korrekt sind und nicht durch fehlerhafte Federn beeinflußt werden. Es kann festgestellt werden, ob eine Feder gebrochen oder angerissen ist, da in diesen Fällen die Federkonstante von dem Vergleichswert nach oben oder unten abweicht. Durch die Normierung der Resonanzamplitude im dritten Verfahrensschritt wird die Einflußgröße "Reifen", die eine unbekannte Zusatzfeder ist, regelungstechnisch aus dem Meßergebnis eliminiert. Somit können genaue Werte für die Wirkung des Stoßdämpfers ermittelt werden.

Im folgenden wird eine beispielhafte Ausführung der erfindungsgemäßen Vorrichtung anhand von Zeichnungen beschrieben. Es zeigen

Fig. 1     einer Vorrichtung für die Bestimmung der in das schwingende System eingespeisten Leistung,

Fig. 2     eine schematische Darstellung des Schwingungsmodells,

Fig. 3     eine schematische Darstellung zum Übersetzungsverhältnis der Radaufhängung.

Da das auf der Ermittlung der in das schwingende System eingespeisten Leistung basierende Meßverfahren bevorzugt wird, wird nachfolgend am Beispiel einer für dieses Verfahren geeigneten Vorrichtung die Vorgehensweise beschrieben. Hierbei wird zugrundegelegt, daß die in das Stoßdämpfer und Feder enthaltende System eingespeiste Leistung im Stoßdämpfer umgesetzt wird, was bis auf geringe Reibungsverluste tatsächlich der Fall ist.

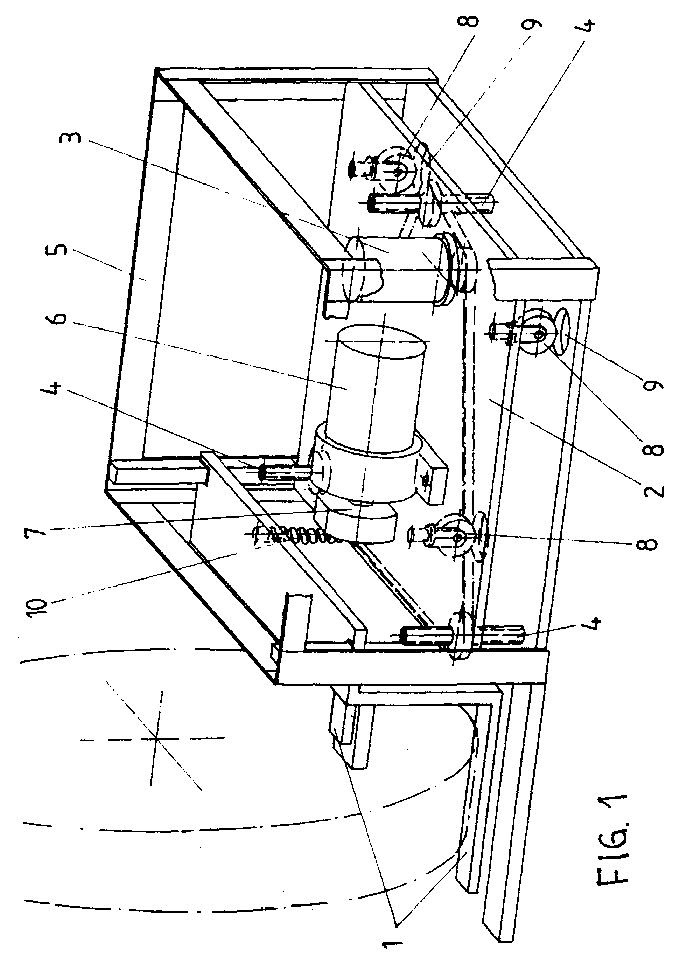

Wie in Fig. 1 dargestellt, weist die Vorrichtung mindestens eine Aufnahme 1 für ein Rad eines Fahrzeuges auf, die beispielsweise gabelförmig ausgebildet sein kann und an der Außenseite des Gehäuses 5 der Vorrichtung vorgesehen ist. Die Aufnahme 1 kann in senkrechter Richtung verfahren werden, wodurch das Rad angehoben bzw. abgesenkt werden kann. Dies erfolgt bei der dargestellten Vorrichtung durch Anheben der Innenplatte 2, die mit der Aufnahme 1 verbunden ist. Hierfür ist ein Stellmotor 3 vorgesehen, der die Innenplatte 2, die beispielsweise durch Gewindestangen 4 in der jeweiligen Position gehalten wird, in senkrechter Richtung bewegt. Um die Vorrichtung verfahrbar zu gestalten können beispielsweise an der Unterseite der Innenplatte 2 Rollen 8 vorgesehen sein, die durch Löcher 9 im Boden des Gehäuses 5 austreten können, wenn die Innenplatte 2 in ihrer tiefsten Stellung ist.

Zum Versetzen des angehobenen Rades in Schwingungen ist ein Hauptmotor 6 vorgesehen, der einen variablen Exzenter 7 antreibt. Die Exzentrizität des Exzenters 7 läßt sich stufenlos einstellen. Dieser Exzenter 7 ist über ein federndes Mittel 10, beispielsweise eine Spiralfeder mit der Aufnahme 1 für das Rad verbunden. Auf diese Weise kann das Rad mit einem variablen Erregerhub in Schwingungen versetzt werden.

Selbstverständlich kann die Vorrichtung auch auf andere Weise realisiert werden, z.B. mit einem Hydraulikaggregat versehen sein, das einerseits Hydraulikzylinder zum Anheben und Absenken der Innenplatte 2 und andererseits einen Hydraulikzylinder zum Einstellen der Exzentrizität des variablen Exzenters 7 betreibt. So kann lediglich mit dem Hydraulikaggregat und einem Hauptmotor 6 eine funktionstüchtige erfindungsgemäße Vorrichtung zum Prüfen von Stoßdämpfern von Fahrzeugen realisiert werden.

Weiterhin sind Sensoren zum Bestimmen des Schwingungsausschlags bei unterschiedlichen Frequenzen, d.h. zur Messung der Erregerkraft (Differenzamplitude des federnden Mittels 10), sowie für die Messung der Schwingungsamplitude der Radnabe und der Karosserie des Fahrzeuges vorgesehen. Mit den beiden letzteren Sensoren ist es dann möglich, eine Messung der Federkonstanten der Radaufhängung vorzunehmen. Neben den beschriebenen Sensoren zur Wegmessung von Aufbau (Karosserie), Radnabe und -aufnahme 1, die die Absolutbewegungen dieser Meßpunkte und die Relativbewegungen zwischen den Meßpunkten ermitteln können, sind Mittel zur Ermittlung der in das schwingende System eingespeisten Leistung vorhanden. Dies kann beispielsweise über die Messung von Kraft und Geschwindigkeit an der Anregefeder 10 erfolgen.

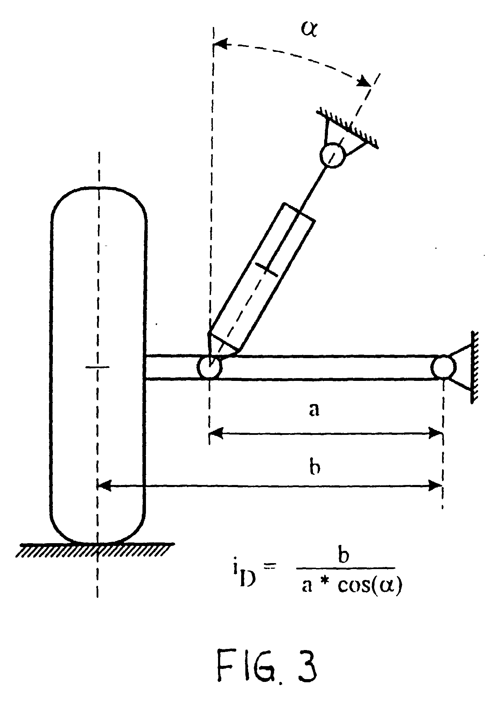

Alle so ermittelten Ergebnisse beziehen sich auf den Radaufstandspunkt. Werden die direkt an den Meßobjekten (Aufbaufeder, Dämpfer) wirkenden Größen benötigt, so ist noch das Hebelarmübersetzungsverhältnis $i_D$ (Fig. 3) nach der Formel $i_D = b : (a * \cos a)$ zu berücksichtigen.

Die gemessenen Ergebnisse werden einer Auswerteeinheit zugeführt, die entweder ein eingebauter oder ein externer Computer sein kann. Die Auswerteeinheit wiederum ist mit einer Ausgabeeinheit verbunden, die beispielsweise als Display und/oder als Drukker ausgebildet sein kann.

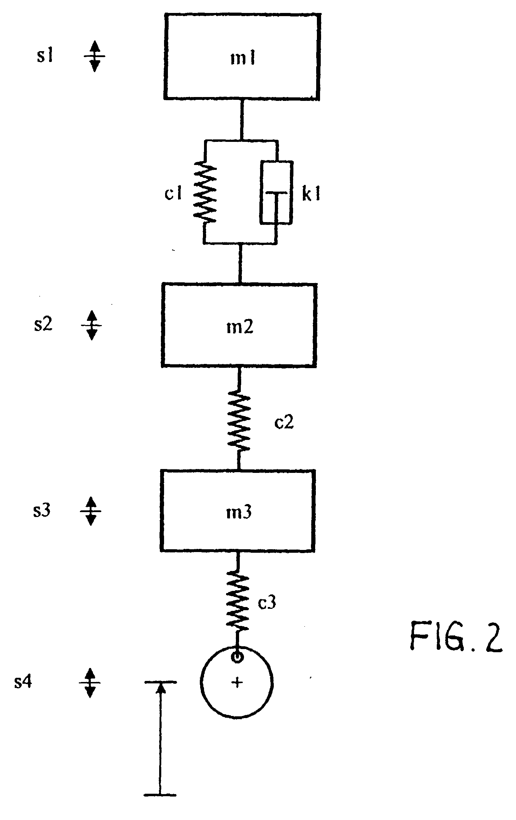

Um die physikalischen Zusammenhänge besser erfassen zu können, wird das Schwingungssystem in ein Schwingungsmodell (Fig. 2) abgebildet, wobei verschiedene zulässige Vereinfachungen vorgenommen werden. Beispielsweise wird angenommen, daß die Wirkung der anderen, nicht angeregten Federn und Dämpfer vernachlässigt werden kann, wenn der Fahrzeugaufbau während der Messung sein Höhenniveau beibehält und die Aufbau-Schwingungsamplitude vernachlässigbar klein wird. Bei derart stillstehendem Aufbau kann die Kopplung des untersuchten Feder-Dämpfersystems mit den übrigen vernachlässigt werden. Wie diese Bedingung erfüllt wird, wird später ausgeführt.
Eine weitere zulässige Annahme ist die Vernachlässigung der Reifendämpfung, die im Verhältnis zur Dämpfung des Stoßdämpfers gering ist.

In dem in Fig. 2 dargestellten Schwingungsmodell sind Massen mit m, Federkonstanten mit c und Auslenkungen mit s bezeichnet. Die Masse $m_1$ ist die schwingende Masse des Fahrzeugaufbaus (Aufbaumasse). Sie kann aus der statischen Radaufstandskraft und der Reifenmasse ermittelt werden. Die Federkonstante $c_1$ der Aufbaufeder wird zu Beginn der Messung ermittelt, wobei auch nichtlineare Federkennungen erfassbar sind. Der Stoßdämpfer, der das eigentliche Meßobjekt darstellt, ist mit $k_1$ bezeichnet.

Die Masse $m_2$ ist die schwingende Masse des Rades und der Radaufhängung (Radmasse), die aus der Schwingungsdynamik des Systems bestimmbar ist. Die federnde Wirkung des Reifens (Reifenfeder) $c_2$ (und gegebenenfalls auch die Radmasse) sind jeweils für ein Fahrzeug aus dem zugelassenen Reifen mit der jeweils höchsten Federkonstante (bzw. über den Hersteller) ermittelbar. Diese Werte können, soweit bekannt, in der Auswerteeinheit gespeichert sein und jeweils abgerufen werden.

Die Masse $m_3$ ist die Masse der Radaufnahme 1 (Anregemasse), die bekannt ist. Die zur Anregung benutzte Feder 10, in Fig. 2 durch $c_3$ dargestellt, dient zur Einkopplung der Anregungsleistung in das schwingende System. Sie ist als Meßfeder ausgeführt, um die an ihr wirkende Anregekraft zu ermitteln. Die Anregung selbst erfolgt über den in der Frequenz veränderbaren variablen Erregerhub. Das Mittenniveau der Anregeschwingung ist einstellbar. Hierdurch kann der Fahrzeugaufbau während der gesamten Messung auf konstantem Niveau gehalten werden, was beispielsweise über einen Regelkreis sicherzustellen ist. Bezüglich der Anregung können somit die Parameter Frequenz, Hub und Mittenniveau vorgegeben werden. Die Dämpfermessung wird bei einer bestimmten, vorher ausgewählten Frequenz durchgeführt, die über die gesamte Messung beibehalten wird. Durch den variablen Erregerhub ist es nun möglich, die in das schwingende System eingespeiste Leistung zu variieren und die Kennlinie des Stoßdämpfers aufzunehmen.

Die Prüfung der Stoßdämpfer mit der erfindungsgemäßen Vorrichtung verläuft wie folgt:

1. Zunächst wird die Vorrichtung auf den Rollen 8 an das Rad eines Fahrzeuges herangerollt und die Aufnahme 1 beidseits der Aufstandsfläche des Rades um dieses angeordnet. Anschließend wird die Innenplatte 2 der Vorrichtung mit dem Stellmotor 3 angehoben, wobei auch die Rollen 8 angehoben werden und sich das Gehäuse 5 auf dem Boden absetzt. Gleichzeitig wird als Sicherheitstest vor der eigentlichen Stoßdämpferprüfung die Federkonstante cl der Aufbaufeder (Radaufhängung) ermittelt, um Federschäden zu detektieren und zu vermeiden, daß die Meßergebnisse durch fehlerhafte Federn verfälscht werden. Eventuell kann die Federkonstante direkt mit einem gespeicherten Referenzwert verglichen werden und bei signifikanten Abweichungen beispielsweise eine Anzeige erfolgen. Während des Anhebens werden ebenfalls die statische Radaufstandskraft und der Abstand zwischen Radnabe und Karosserie ermittelt und gespeichert. Des weiteren wird bei dem Anheben die Reibung der Radaufhängung bestimmt. Die Radaufstandskraft erhöht sich langsam während des Anhebens des Rades, wobei sich allerdings die Karosserie aufgrund der Reibungskräfte zunächst noch nicht bewegt. Erst bei Überschreiten der Reibungskraft bewegt sich auch die Karosserie. Auf diese Weise läßt sich anhand der Radaufstandskraft und des Abstandes zwischen Radnabe und Karosserie die Reibung der Radaufhängung ermitteln.

2. Die Aufnahme 1 wird auf ein bestimmtes Anfangsniveau eingestellt. Im Ruhezustand wird nun die statische Radaufstandskraft gemessen und das Lageniveau der Karosserie registriert.

3. Nun wird der Hauptmotor 6 betätigt und mit einem vorzugsweise kleinen Erregerhub des variablen Exzenters 7 der Bereich der Erregerfrequenzen z.B. von der minimalen bis zur maximalen Erregerfrequenz durchfahren und die Resonanzfrequenz der Radaufhängung gesucht. Dazu wird die Schwingungsamplitude zwischen Karosserie und Radnabe beobachtet. Es treten mit steigender Frequenz mehrere Resonanzstellen auf. Die erste Resonanzstelle wird als Aufbauresonanz bezeichnet. Sie liegt in der Regel zwischen 0,5 und 2,5 Hz und ist zur Messung nicht geeignet, da der Aufbau eine große Schwingungsamplitude aufweist und somit die Forderung der ruhenden Karosserie nicht erfüllt ist. Das zweite Schwingungsmaximum liegt in der Regel im Bereich zwischen ca. 7 und 15 Hz. Dies ist die gesuchte Meßfrequenz, bei der der Fahrzeugaufbau nur noch sehr geringe, vernachlässigbare Schwingungsamplituden aufweist. Auch was den Leistungsfluß durch das schwingende System von der Anregung bis hin zum Dämpfer betrifft, ist diese Frequenz günstig (die Radresonanz entspricht hier in etwa der Leistungsresonanz).

4. Im nächsten Schritt wird die zuvor ermittelte Resonanzfrequenz vorgegeben und der Anregehub über ein Verstellen des Exzenters von Null an schrittweise erhöht. Jeweils nach Stabilisierung eines neuen Schwingungszustandes (Einschwingzeit) wird eine eventuelle Verschiebung der Karosserie in Bezug auf das Referenzniveau über eine Niveauverschiebung der Radaufnahme ausgeglichen (nachgeregelt). Nun werden die an der Meßfeder eingespeiste Leistung und die sich einstellende Schwingungsamplitude zwischen Aufbau und Radnabe gemessen. Aus dieser Amplitude und der bekannten Frequenz kann die Geschwindigkeit ermittelt werden. Aus der in das System eingespeisten (und vom Stoßdämpfer aufgenommenen) Leistung und der Geschwindigkeit läßt sich die Dämpferkraft ermitteln. Diese Dämpferkraft stellt den Mittelwert der Dämpferkraft zwischen Zug- und Druckstufe dar.

In der Regel sind die Zug- und Druckstufen bei Stoßdämpfern unterschiedlich ausgelegt und zwar derart, daß bei gleicher Geschwindigkeit die Zugkraft größer ist als die Druckkraft. Diese Dämpfereigenschaft bewirkt, daß sich die Karosserie der Radnabe annähert, weil der Stoßdämpfer sich leichter zusammendrückt als auseinanderzieht. Die Aufbaufeder wird dabei mit der daraus resultierenden Differenzkraft vorgespannt. Da die aus dem Unterschied zwischen Zug- und Druckstufe resultierende Absenkung der Karosserie wie oben beschrieben durch Niveauregelung (in der Regel: Anhebung der Aufnahme 1) wieder ausgeglichen wird, kann man aus dieser Niveauregelung den Federweg ermitteln, mit dem die Aufbaufeder vorgespannt wird. Aus der gemessenen Federrate und dem Federweg läßt sich die Kraftdifferenz zwischen Zug- und Druckstufe des Stoßdämpfers ermitteln. Die Kennlinie des Stoßdämpfers kann also getrennt für Zug- und Druckstufe punktweise bis zur Leistungsgrenze der Anregung ermittelt werden.

Diese Kennlinie kann dann mit einer vorgegebenen Soll-Kennlinie verglichen werden. Das Aufbaudämpfungsmaß ist aus der Aufbaumasse ml, der Federrate c1 und der Stoßdämpferkennung k1 nach der Formel $D = k1 : (2 * (c1 * m1)^{-2})$ ermittelbar.

5. Aus den bisher ermittelten Größen und der Schwingungsdynamik des Systems wird die Radmasse bestimmt. Das Dämpfimgsmaß der Raddämpfung wird unter Annahme einer maximal zulässigen Reifenfederrate (worst case-Betrachtung) für ein bestimmtes Fahrzeug aus den Werten für Radmasse m2, Reifenfeder c2, Aufbaufeder c1 und der Dämpferkennung k1 analog der unter 4. angegegebenen Formel berechnet.

6. Es kann somit festgestellt werden, ob das Fahrzeug bezüglich des Aufbaus und/oder eines Rades ein bestimmtes, festgelegtes Mindestdämpfungsmaß erfüllt.

Es ist möglich, nur den Stoßdämpfer eines Rades oder aber alle Stoßdämpfer eines Fahrzeuges zu prüfen und danach das Einzel- oder das Gesamtergebnis auf der Ausgabeeinheit anzuzeigen bzw. auszudrukken. Selbstverständlich kann mittels des Displays eine Menüführung in Vollgraphikanzeige vorgesehen sein.

Zur Bestimmung der Kennlinie des Stoßdämpfers aus den Beschleunigungen der schwingenden Massen wird wie folgt vorgegangen:

Aus den Beschleunigungen der schwingenden Massen können nach der Formel $F = m * a$ die auf die Massen wirkenden Kräfte ermittelt werden. Die auf die Masse ml (Aufbau) wirkende Kraft wird dann anteilig auf die Feder und den Stoßdämpfer aufgeteilt und damit die Kennlinien von Feder und Stoßdämpfer aufgenommen, wozu es erforderlich ist, auch die Massen zu kennen. Diese werden zuvor ebenfalls aus den Massebewegungen ermittelt.

Als Meßgrößen für dieses Verfahren werden die Beschleunigungen aller schwingenden Massen sowie die Anregekraft benötigt. Aus den Beschleunigungen lassen sich die Geschwindigkeiten und die Wege der Massen berechnen. Da jede der Größen für sich allein die Bewegung einer Masse charakterisiert, wird im folgenden der Begriff "Bewegung" allgemein verwendet, ohne damit eine spezielle Größe zu implizieren. Die Anregekraft wird über eine Meßfeder bestimmt, deren Länge gemessen wird. Als statische Kraft wird die Kraft auf die Messfeder bei aufgestelltem ruhendem Fahrzeug bezeichnet. Die Anregekraft F ist die Kraft auf die Meßfeder, wenn das System in Bewegung ist. Alle Größen werden in ihrem Zeitverlauf aufgezeichnet.

Zur Bestimmung der Massen sind die statische Kraft, die Anregekraft und Massebeschleunigungen erforderlich. Unter Verwendung der Bezeichnungen gemäß Fig. 2 und F1, F2, F3 als Bezeichnung für die auf die Massen m1, m2 und m3 wirkenden Kräfte und Fg1, Fg2 und Fg3 als den Gewichtskräften der Massen m1, m2, m3 ergibt sich folgendes Gleichungssystem:

$$m_1 x_1'' = F1 - Fg1$$

$$m_2 x_2'' = F2 - F1 - Fg2$$

$$m_3 x_3'' = F3 - F2 - Fg3$$

$$F3 = F$$

aus dem sich die folgende Gleichung GL1 herleiten läßt:

$$m_1 x_1'' + m_2 x_2'' + m_3 x_3'' =$$
$$F - (Fg1 + Fg2 + Fg3) = F - Fg$$

Die Summe aller Kräfte auf die Massen ist die Anregekraft minus der statischen Gewichtskraft. Zur Berechnung der Massen werden zu drei verschiedenen Zeitpunkten die Beschleunigungen und die Anregekraft gemessen und jeweils in obige Gleichung eingesetzt. Damit erhält man ein Gleichungssystem für die drei unbekannten Massen.

Die Kraft F1 auf die Masse ml ist die Summe aus der Federkraft und der Dämpferkraft. Die Kraft F1 ist gekennzeichnet durch die Gleichung F1 = c * x + k * v. Wenn die Geschwindigkeit v Null ist, wird die gesamte Kraft von der Feder aufgebracht. Aus dem momentanen Weg und der Federkraft bestimmt sich die Federsteifigkeit c. Wenn der Federweg x Null ist, dann wird die Kraft vom Stoßdämpfer aufgebracht. Aus dieser Kraft und der Geschwindigkeit ist die Dämpferkennung k gegeben. Die verschiedenen Nulldurchgänge treten in einem Schwingungsverlauf zweimal auf, einmal für die Druckphase und einmal für die Zugphase. So sind die unterschiedlichen Kennungen für Zug- und Druckstufe gegeben.

Durch Verändern der eingebrachten Leistung oder auch der Anregefrequenz verändert man die Schwingungsamplituden und kann somit die Kennlinie punktweise abfahren. Man kann auch vorher die Federkennlinie messen, um dann mittels einer direkten Kraftaufteilung zur Dämpferkraft zu gelangen.

Als Meßbedingung wird vorausgesetzt, daß die Karosserie möglichst kleine Schwingungsamplituden ausführt und daß das Höhenniveau bebehalten wird. Um dies zu erreichen, wird die Messung bei Radresonanz durchgeführt und das Niveau gleichbleibend geregelt durch eine niveauveränderliche Anregung.

**Patentansprüche**

1. Vorrichtung zum Prüfen von Stoßdämpfern von Fahrzeugen mit mindestens einer Aufnahme (1) für ein Rad eines Fahrzeuges, Mitteln (6, 7, 10) zum Versetzen des aufgenommenen Rades in Schwingungen und Mitteln zum Bestimmen von Schwingungsausschlägen bei unterschiedlichen Frequenzen sowie einer Auswerte- und Ausgabeeinheit. **dadurch gekennzeichnet,** daß Mittel zum Bestimmen der Kennlinie des Stoßdämpfers eines am Fahrzeug befindlichen Rades vorgesehen sind mit Mitteln zum bestimmten der über die Aufnahme (1) für das Rad in das Stoßdämpfer und Feder des Fahrzeuges enthaltende schwingende System eingebrachten Erregerkraft.

2. Vorrichtung gemäß Anspruch 1, **dadurch gekennzeichnet,** daß die Mittel zuin Bestimmen der Stoßdämpferkennlinie Mittel zum Bestimmen der in das Stoßdämpfer und Feder des Fahrzeuges enthaltende schwingende System über die Aufnahme (1) für das Rad eingespeisten Leistung aufweist.

3. Vorrichtung gemäß Anspruch 1, **dadurch gekennzeichnet,** daß die Mittel zum Bestimmen der Stoßdämpferkennlinie Mittel zum Bestimmen der Beschleunigungen der Massen im Stoßdämpfer und Feder des Fahrzeuges enthaltenden schwingenden System aufweisen.

4. Vorrichtung gemäß Anspruch 1 oder Anspruch 2, **dadurch gekennzeichnet,** daß Sensoren an der Radnabe, an der Aufnahme (1) und an der Karosserie des Fahrzeugs vorgesehen sind und daß der Erregerhub der Mittel (7) zum Versetzen des Rades in Schwingungen variabel ist.

5. Vorrichtung gemäß Anspruch 4, **dadurch gekennzeichnet,** daß mit den Sensoren an der Radnabe, an der Aufnahme (5) und an der Karosserie die Federkonstante der Elemente der Radaufhängung meßbar ist.

6. Vorrichtung gemäß Anspruch 1, **dadurch gekennzeichnet,** daß Mittel zum Regulieren des Höhenniveaus der Karosserie des Fahrzeuges vorgesehen sind.

7. Vorrichtung gemäß Anspruch 1, **dadurch gekennzeichnet,** daß die Vorrichtung verfahrbar ist.

8. Vorrichtung gemäß Anspruch 4, **dadurch gekennzeichnet,** daß ein steuerbarer Exzenter (7) zum Variieren des Erregerhubs vorgesehen ist.

**Claims**

1. A device for testing vehicle shock absorbers, having at least one support (1) for a vehicle wheel, means (6,7,10) for making the supported wheel vibrate, means for determining the amplitude of vibration at different frequencies, and an evaluating and output unit, **characterized in that** means are provided for determining the shock absorber characteristic of a wheel mounted on the vehicle, with means to determine the excitation energy supplied via the wheel support (1) to the vibratory system containing the vehicle's shock absorber and spring.

2. The device of claim 1, **characterized in that** the means for determining the shock absorber characteristic has means for determining the excitation power supplied via the wheel support (1) to the vibratory system containing the vehicle's shock absorber and spring.

3. The device of claim 1, **characterized in that** the means for determining the shock absorber characteristic has means for determining the accelerations of the masses in the vibratory system containing the vehicle's shock absorber and spring.

4. The device of claim 1, **characterized in that** sensors are provided on the wheel hub, on the support (1) and on the vehicle body, and that the excitation travel of the means (7) for making the wheel vibrate is variable.

5. The device of claim 4, **characterized in that** the spring constant of the wheel suspension elements can be measured with the sensors on the wheel hub, on the support (5) and on the vehicle body.

6. The device of claim 1, **characterized in that** in that means are provided for regulating the height of the vehicle body.

7. The device of claim 1, **characterized in that** the device is mobile.

8. The device of claim 4, **characterized in that** a controllable excenter (7) is provided for varying the excitation travel.

**Revendications**

1. Dispositif pour contrôler des amortisseurs de véhicules ayant au moins une prise (1) pour une roue d'un véhicule, des moyens (6, 7 10) pour faire osciller la roue saisie et des moyens pour déterminer des amplitudes d'oscillation à différentes fréquences ainsi qu'une unité d'exploitation et de sortie, **caractérisé en ce que** des moyens sont prévus pour déterminer la courbe caractéristique de l'amortisseur d'une roue située sur le véhicule avec des moyens pour déterminer de la force d'excitation appliquée au travers de la prise (1) pour la roue au système oscillant contenant l'amortisseur et le ressort du véhicule.

2. Dispositif selon la revendication 1, **caractérisé en ce que** les moyens pour déterminer la courbe caractéristique de l'amortisseur présentent des moyens pour déterminer la puissance appliquée au travers de la prise (1) pour la roue au système oscillant contenant l'amortisseur et le ressort du véhicule.

3. Dispositif selon la revendication 1, **caractérisé en ce que** les moyens pour déterminer la courbe caractéristique de l'amortisseur présentent des moyens pour déterminer les accélérations des masses dans le système oscillant contenant l'amortisseur et le ressort du véhicule.

4. Dispositif selon la revendication 1 ou la revendication 2, **caractérisé en ce que** des capteurs sont prévus sur le moyeu de la roue, sur la prise (1) et sur la carrosserie du véhicule et en ce que la levée d'excitation du moyen (7) pour faire osciller la roue est variable.

5. Dispositif selon la revendication 4, **caractérisé en ce que** la constante du ressort de l'élément de la suspension de la roue est mesurable avec les capteurs sur le moyeu de la roue, sur la prise (1) et sur la carrosserie.

6. Dispositif selon la revendication 1, **caractérisé en ce que** des moyens sont prévus pour réguler le niveau de la hauteur de la carrosserie du véhicule.

7. Dispositif selon la revendication 1, **caractérisé en ce que** le dispositif est mobile.

8. Dispositif selon la revendication 4, **caractérisé en ce qu'**un excentrique (7) contrôlable est prévu pour faire varier la levée d'excitation.

FIG. 1

FIG. 2

$$i_D = \frac{b}{a * \cos(\alpha)}$$

FIG. 3